# EUROPÄISCHE PATENTSCHRIFT

(11) **EP 1 269 898 B1**
(45) Veröffentlichungstag und Bekanntmachung des Hinweises auf die Patenterteilung: **16.04.2008**
(21) Anmeldenummer: 02014300.4
(22) Anmeldetag: 27.06.2002
(51) Int. Cl.: A47J 42/56, A47J 43/046, A47J 43/07

(54) **Küchenmaschine**
Food processor
Appareil menager

(30) Priorität: 29.06.2001 DE 10131483; 17.06.2002 DE 10226941
(43) Veröffentlichungstag der Anmeldung: 02.01.2003
(73) Patentinhaber: Vorwerk & Co. Interholding GmbH, 42275 Wuppertal (DE)
(72) Erfinder: Brech, Oliver, Dipl.-Ing., 44339 Dortmund (DE); Weber, Klaus Martin, Dipl.-Ing., 42281 Wuppertal (DE); Kemker, Uwe, 42105 Wuppertal (DE); Dörner, Stefan, Dipl.-Ing., 42719 Solingen (DE); Delseith, Petra, Dipl.-Ing., 42855 Remscheid (DE); Schönhoff, Helmut, 42897 Remscheid (DE)
(74) Vertreter: Müller, Enno

(56) Entgegenhaltungen:
- EP-A- 0 081 874
- EP-A- 0 270 851
- EP-A- 0 638 273
- DE-A- 4 309 033
- US-A- 4 373 677
- US-A- 5 979 806

## Beschreibung

Die Erfindung betrifft eine Küchenmaschine nach den Merkmalen des Oberbegriffes des Anspruches 1.

Küchenmaschinen der in Rede stehenden Art sind bekannt, wobei ein Rührgefäß mit zuordbarem Deckel in einer in dem Gehäuse ausgebildeten Aufnahme einsetzbar ist. Diesbezüglich ist weiter bekannt, das Rührgefäß mit einem über die Küchenmaschine antreibbaren Rührwerk und gegebenenfalls mit einer zumindest den Bodenbereich des Rührgefäßes beaufschlagenden 1 leizung zu versehen. So können nicht nur Speisen durch Mixen bzw. Zermahlen zubereitet werden, sondern darüber hinaus ist auch eine zusätzliche Garbehandlung durchführbar. Um während des Betriebes, insbesondere während des Rührwerkbetriebs ein Eingreifen in das Rührgefäß zu verhindern, ist es weiter bekannt, das Rührgefäß und/oder den Deckel des Rührgefäßes zu verriegeln, welche Verriegelung erst nach einem Stillstand des Rührwerkes aufhebbar ist. Hier sind Lösungen bekannt, bei welchen über den Deckel eine bajonettartige Festlegung von Rührgefäß und Deckel an dem Gehäuse erfolgt, wobei im Zuge der Schließbewegung des Deckels durch Verdrehen um die Vertikalachse desselben ein an dem Deckel angeformtes Freigabeelement den Weg zur Verlagerung eines gehäuseseitigen Verriegelungselementes freigibt. Letzteres verbleibt während des Betriebs unverrückbar in der Verriegelungsstellung, so dass ein Zurückziehen des Deckels in die Lösestellung nicht ermöglicht ist. Diese Verriegelungsstellung des Verriegelungselementes ist erst nach einem Ausschalten des Rührwerkes überlaufbar.

Bei einer aus der EP 638 273 A1 bekannten Küchenmaschine wird mit der Verdrehung des Deckels ein elektrischer Schalter betätigt, der die elektrische Versorgung insgesamt an- oder abstellt.

Im Hinblick auf den genannten Stand der Technik stellt sich die Erfindung die Aufgabe, eine Küchenmaschine anzugeben, die in der bekannten Weise betriebssicher ist, aber gleichwohl vorteilhaft ausgestaltet ist.

Diese Aufgabe ist beim Gegenstand des Anspruches 1 gelöst, wobei darauf abgestellt ist, dass aufgrund der Schalterbetätigung freigegeben ist, aber der die Wägeeinrichtung betreffende Schaltkreis von einer Schalterbetätigung unabhängig ist.

Erst bei Schalterbetätigung ist der das Rührwerk beeinflussende Schaltkreis der Platine beströmt. Auch ein gegebenenfalls vorgesehener Schaltkreis einer Heizung kann entsprechend schalterbetätigbar aktiviert werden. Ein Auswiegen ist im Rührgefäß dagegen auch ohne Verriegelung desselben bzw. ohne aufgesetzten Deckel möglich.

Weiter ist bevorzugt ein Freigabeelement vorgesehen, als Bestandteil des das Rührgefäß aufnehmenden Gehäuses.

Eine Betätigung desselben erfolgt durch ein Verdrehen des Rührgefäßes und/oder des Deckels um die Gefäß-Vertikalachse, welche Drehbewegung weiter bevorzugt anschlagbegrenzt ist. Diese, die Betriebsstellung des Rührgefäßes und/oder des Deckels definierende Verdrehstellung ist durch das hiernach freigegebene, bevorzugt gehäuseseitige verriegelungselement verriegelt, so dass ein Eingriff in das Rührgefäß während des Betriebs nicht möglich ist. Diesbezüglich wird weiter eine Drehbetätigung des Freigabeelementes durch Beaufschlagung mittels des Rührgefäßes und/oder des Deckels bevorzugt, wobei im Zuge dieser Freigabeelement-Drehbewegung der Weg für das-Verriegelungselement in Richtung auf eine verriegelungsstellung freigegeben wird. Die Verlagerung des Verriegelungselementes in die Verriegelungsstellung erfolgt erst nach einem Einschalten der Küchenmaschine, insbesondere nach einem Einschalten des Rührwerkes, welche Verriegelungsstellung erst nach einem Ausschalten, weiter bevorzugt nach einem Stillstand des Rührwerkes aufgehoben wird. Des weiteren ist durch die erfindungsgemäße Ausgestaltung einer Inbetriebnahme der Küchenmaschine, insbesondere des Rührwerkes bei nicht vorhandenem Rührgefäß und/oder Deckel entgegengewirkt. Dies ist durch die Anordnung des Freigabeelementes erreicht, welches erst nach einer Verlagerung desselben, eben durch das Rührgefäß und/oder den Deckel den Weg zur Verlagerung des Verriegelungselementes freigibt. Der Versuch, die Küchenmaschine, insbesondere das Rührwerk, ohne Rührgefäß und/oder Deckel zu starten, wird durch Erfassen der nicht ermöglichten Verlagerung des Verriegelungselementes in die Verriegelungsstellung unterbunden. Diese Erfassung erfolgt auf elektrischem bzw. elektronischem Wege, über einen durch das Verriegelungselement in der einen oder anderen Endstellung zu beaufschlagenden Schalter. Bevorzugt wird weiter das Verriegelungselement und auch das Freigabeelement in einem geschützten Bereich innerhalb des Gehäuses angeordnet, wobei eine Gehäuseöffnung zur Beaufschlagung des Freigabeelementes durch das Rührgefäß und/oder den Deckel während des Betriebs durch das Rührgefäß und/oder den Deckel abgedeckt wird, so dass eventuell über den Gefäßrand bzw. den Deckelrand laufendes Gargut oder Ähnliches nicht in die betreffende Gehäuseöffnung eindringen kann, was zu einer Funktionsstörung der Verriegelungs- und Freigabemechanik führen würde. Das Verriegelungselement kann insofern verriegelnd eingreifen, dass dieses bspw. in eine entsprechende Verriegelungsaufnahme des Rührgefäßes und/oder des Deckels eingreift. Bevorzugt wird jedoch eine Ausgestaltung, bei welcher das Verriegelungselement das Freigabeelement in der Freigabestellung verriegeln kann. Diese Freigabestellung entspricht der Stellung, in welcher das Rührwerk eingeschaltet werden kann. Darüber hinaus ist diesbezüglich vorgesehen, dass das verriegelte Freigabeelement das Rührgefäß und/oder den Deckel verriegelt. So kann bspw. ein der Verlagerung des Freigebeelementes dienender Abschnitt des Rührgefäßes und/oder des Deckels derart durch das Freigabeelement in der verschwenkten Position desselben gefangen sein, dass einem Zurückdrehen des Rührgefäßes und/oder des Deckels in die Ehtnahmestellung durch die Verriegelung des Freigabeelementes durch das Verriegelungselement verhindert ist. Der mit dem Freigabeelement zusammenwirkende Abschnitt kann hierbei weiter bspw. ein radial abragender Betätigungs-/Verriegelungs-Steg sein. Zur weiteren Erhöhung der Funktionssicherheit wird vorgeschlagen, dass das Freigabeelement in eine, eine Verlagerung des Verriegelungselementes sperrende Stellung vorgespannt ist, so dass durch die Vorspannung das Freigabeelement stets in eine Grundstellung beaufschlagt ist, in welcher der Verlagerungsweg für das Verriegelungselement versperrt ist. Es bedarf somit keiner manuellen Ausrückung des Freigabeelementes in die sperrende Stellung. Vielmehr wird diese stets selbsttätig erreicht. Die Verriegelung des Freigabeelementes ist bspw. dadurch realisiert, dass ein Abschnitt des Verriegelungselementes in eine entsprechend positionierte, fensterartige Öffnung des Freigabeelementes eintaucht. Diesbezüglich kann es sich als vorteilhaft erweisen, wenn diese Verriegelungsstellung nicht selbsthemmend ausgebildet ist. Vielmehr ist es hierbei von Vorteil, wenn diese Stellung durch den mit dem Freigabeelement zusammenwirkenden Abschnitt des Rührgefäßes und/oder des Deckels gehalten wird. Ohne diese Beaufschlagung des Freigabeelementes durch den Gefäß- bzw. Deckelabschnitt verlagert sich das Freigabeelement, bedingt durch die angesprochene Vorspannung, zurück in Richtung Grundstellung, was zugleich eine Rückverlagerung des Verriegelungselementes, deren mit dem Freigabeelement zusammenwirkender Abschnitt bspw. eine mit dem Freigabeelement-Ausnehmungsrand zusammenwirkende Auslenkschräge aufweist, bewirkt. Das Verriegelungselement kann des weiteren in Form eines um eine Achse schwenkbar gelagerten Hebels gebildet sein, wobei weiter bevorzugt wird, dass das Verriegelungselement magnetbetätigt ist. Vorgeschlagen wird weiter, dass der Magnet durch einen Drehzahlsteller des Gerätes zu aktivieren ist. Demnach wird bei einem Versuch der Aktivierung des Rührwerkes über den Drehzahlsteller der Magnet beaufschlagt, was über einen Magnetstößel die Schwenkverlagerung des Verriegelungselementes bewirkt. Sofern durch ordnungsgemäßen Einsatz und Verdrehen des fäßes und/oder des Deckels das Freigabeelement verlagert wurde, kann das Verriegelungselement mittels des Magneten in die Verriegelungsstellung verschwenken. Ist dies nicht der Fall, so wird dieser Fehlversuch detektiert, was ein Abfallen des Magneten und eine Nichtinbetriebnahme des Rührwerkes zur Folge hat. Als besonders vorteilhaft erweist sich weiter, dass das durch den Magneten bewirkte Verriegelungselement im Zuge der Bewegung in die Verriegelungsstellung zugleich einen Schalter für die Spannungsbeaufschlagung eines Heizwerkes und/oder eines Rührwerk-Motors betätigt. Demnach erfolgt die Spannungsbeaufschlagung nur dann, wenn das Rührgefäß und/oder der Deckel ordnungsgemäß eingesetzt und zur Verlagerung des Freigabeelementes verdreht sind. Des weiteren können durch den Magneten auch zeitgleich zwei Schalter betätigt werden, wodurch eine zwei-polige Schaltung zur Ansteuerung des Heizwerkes und/oder des Rührwerk-Motors erreicht werden kann. In einer Weiterbildung des Erfindungsgegenstandes ist vorgesehen, dass das Verriegelungselement mit dem Drehzahlsteller gekoppelt ist. Zufolge dieser Ausgestaltung ist bevorzugt eine mechanische Blockade des Drehzahlstellers gegeben, sofern das Rührgefäß und/oder der Deckel nicht in die Freigabestellung verschwenkt ist. Diese mechanische Blockierung kann alternativ aber auch, wie bevorzugt, kombinativ zu einem, eine elektrische Betätigung bzw. Unterbrechung eines, die Stromversorgung insbesondere des Rührwerks gewährleistenden Schalters vorgesehen sein. Bevorzugt wird hierbei eine Ausgestaltung, bei welcher der Drehzahlsteller bzw. ein mit dem Drehzahlsteller drehfest gekuppeltes Stellerelement das Verriegelungselement ist. Ist das Rührgefäß und/oder der Deckel nicht in die Freigabestellung verlagert, so ist durch die erfindungsgemäße mechanische Blockade ein Stellen des Drehzahlstellers aus der Aus-Position heraus nicht möglich. Ist hingegen das Rührgefäß und/oder der Deckel ordnungsgemäß in die Freigabestellung verdreht, so ist der das Verriegelungselement ausbildende Drehzahlsteller freigegeben und somit betätigbar. Hingegen ist bei einer Stellung des Drehzahlstellers bzw. des Verriegelungselementes jenseits der Aus-Stellung das Zurückdrehen des Rührgefäßes und/oder des Deckels in eine Entnahmestellung unterbunden. So kann auch bei dieser mechanischen Ausgestaltung der Verriegelung bei laufendem Rührwerk bspw. nicht der Deckel des Rührgefäßes entfernt werden. Diesbezüglich erweist es sich weiter als vorteilhaft, dass das Freigabeelement eine Betätigungsstange aufweist, welche die Verbindung zwischen einer Verriegelungsebene zwischen dem Rührgefäß und dem Deckel und dem Drehzahlsteller schafft. Diese Betätigungsstange ist des Weiteren bevorzugt jeweils endseitig in dem Gehäuse der Küchenmaschine gelagert. Das von dem Rührgefäß bzw. von dem Deckel zu betätigende Freigabeelement besteht weiter bevorzugt aus der Betätigungsstange und einem hiervon gesonderten Sperr-Mitnahmeteil, welch letzteres im Zusammenwirkungsbereich mit dem Rührgefäß bzw. dem Deckel gehäuseinnenseitig der Küchenmaschine um eine parallel zur Rührgefäßachse verlaufenden Längsachse drehbar gehaltert ist. Dieses Sperr-Mitnahmeteil wirkt auf die Betätigungsstange ein derart, dass das drehgelagerte Sperr-Mitnahmeteil die Betätigungsstange um eine Längsachse verdreht, wobei die Längsachse nicht zwangsläufig die Körperachse der Betätigungsstange sein muss. Vielmehr entspricht diese Längsachse einer die beiden Endlagerpunkte der Betätigungsstange verbindenden Linie, wobei ein unterer, dem Drehhzahlsteller bzw. dem Verriegelungselement zugeordneter Lagerpunkt, bevorzugt durch eine kugelkopfartige Lagerung in dem Maschinengehäuse gebildet ist und der gegenüberliegende, obere Lagerpunkt der Betätigungsstange durch einen Formschluss zwischen Betätigungsstange und Sperr-Mitnahmeteil ausgeformt ist. Weiterhin ist vorgesehen, dass die Betätigungsstange fußseitig eine quer zu ihrer örtlichen Längsachse vorragende Blockierungsscheibe aufweist zum Eingriff in eine, in Richtung einer Drehachse des Drehzahlstellers verlaufenden Blockierungsnut. Bei nicht ordnungsgemäß aufgesetztem Rührgefäß bzw. Deckel und demnach in einer Grundposition verharrendem Sperr-Mitnahmeteil greift die Blockierungsscheibe der Betätigungsstange in die zugeordnete Blockierungsnut des Drehzahlstellers bzw. des Verriegelungselementes ein, zur Drehblockierung desselben. Diesbezüglich ist weiter vorgesehen, dass die Blockierungsscheibe nur über einen Teil des Umfangs der Betätigungsstange ausgebildet ist, so dass durch ein Verdrehen des Rührgefäßes bzw. des Deckels in die Freigabestellung die Blockierungsscheibe über die Betätigungsstange aus der Blockierungsnut des Drehzahlstellers heraus bewegt wird, zur Drehfreigabe des Stellers. Die Umfangslänge der Blockierungsscheibe ist entsprechend dem Drehwinkel der Betätigungsstange zwischen Verriegelungs- und Freigabeposition angepasst. Um in dieser Freigabestellung des Drehzahlstellers das Abnehmen insbesondere des Deckels des Rührgefäßes, was zunächst eine Rückverdrehung desselben verlangt, bei einer Stellung des Drehzahlstellers außerhalb der Aus-Stellung zu verhindern, ist weiter vorgesehen, dass die Blockierungsscheibe in ihrer Umfangserstreckung in einen Eingriffszahn übergeht, der mit einer zugeordneten Umfangsnut des Drehzahlstellers zusammenwirkt und bei gewählter Drehzahl ein Verdrehen der Betätigungsstange hindert. Als handhabungstechnisch vorteilhaft erweist sich zudem eine Weiterbildung, bei welcher bevorzugt fußseitig der Betätigungsstange eine Schenkel-Rückstellfeder vorgesehen ist, welche die Betätigungsstange und über diese das Sperr-Mitnahmeteil in eine Deckel- bzw. Rührgefäß-Freigabestellung beaufschlagt. Des Weiteren ist in einer bevorzugten Ausgestaltung vorgesehen, dass die Betätigungsstange abgekröpft verläuft. Zudem können das Sperr-Mitnahmeteil sowie die Betätigungsstange als auch das mit dem Drehzahlsteller gekoppelte Verriegelungselement als Kunststoffteile, insbesondere Kunststoff-Spritzteile ausgeformt sein. In einer bevorzugten Ausgestaltung des Erfindungsgegenstandes ist vorgesehen, dass das Freigabeelement durch einen Deckelabschnitt bewegbar ist. Demzufolge ist zur Inbetriebnahme der Maschine, insbesondere des Rührwerkes, ein ordnungsgemäß auf das Rührgefäß aufgesetzter und hiernach in eine Sicherungsstellung verdrehter Deckel Bedingung. Der mit dem Freigabeelement zusammenwirkende Deckelabschnitt kann hierbei als radial abkragender Steg ausgebildet sein. Hieraus ergibt sich der weitere Vorteil, dass unterhalb des Freigabeelementes ein solcher Freiraum gegeben ist, dass der Deckelabschnitt das Freigabeelement unterläuft, wenn sich der Deckelabschnitt nicht auf einem vorbestimmten Höhenniveau befindet. So kann durch die erfindungsgemäße Anordnung neben dem Vorhandensein des Deckels auch erfasst werden, ob eine Dichtung zwischen Deckel und Gefäß eingelegt ist. Ist dies nicht der Fall oder ist diese nicht ordnungsgemäß eingesetzt, so wird die relative Höhenlage des Deckels zu dem Gehäuse um den Betrag der Dichtungshöhe reduziert. Dadurch befindet sich der mit dem Freigabeelement zusammenwirkende Deckelabschnitt in einer Position unterhalb des Freigabeelementes. Bei dem Versuch, den Deckel durch Drehung zu arretieren, taucht der Deckelabschnitt zwischen dem Freigabeelement und dem Gehäuse hindurch, so dass das Freigabeelement in seiner Ausgangsposition verbleibt und demnach das Verriegelungselement nicht in die gewünschte mechanische Verriegelungsstellung bzw. elektrische Freigabestellung für das Heizwerk und/oder den Rührwerk-Motor verlagert werden kann.

Nachstehend ist die Erfindung anhand der beigefügten Zeichnungen, welche lediglich zwei Ausführungsbeispiele darstellen, näher erläutert. Es zeigt:
- Fig. 1: eine perspektivische Ausschnittdarstellung einer erfindungsgemäßen Küchenmaschine mit einem deckelverschlossenen und in das Gehäuse der Küchenmaschine eingesetzten Rührgefäß, eine erste Ausführungsform betreffend;
- Fig. 2: eine partiell geschnittene perspektivische Ausschnittsdarstellung eines Zusammenwirkungsbereiches eines Deckelabschnittes und einer gehäuseseitigen Verriegelungseinrichtung, die entriegelte Stellung betreffend;
- Fig. 3: den Schnitt gemäß der Linie III-III in Fig. 2 bei ordnungsgemäßer Anordnung von Rührgefäß, Deckel und zwischengeschalteter Dichtung;
- Fig. 4: eine der Fig. 3 entsprechende Schnittdarstellung, jedoch eine nicht ordnungsgemäße Anordnung betreffend;
- Fig. 5: eine weitere perspektivische, partiell geschnittene Detaildarstellung mit Blick auf ein magnetbetätigbares Verriegelungselement, gleichfalls die entriegelte Stellung betreffend;
- Fig. 6: eine weitere perspektivische, partiell geschnittene Detaildarstellung des Zusammenwirkungsbereiches von Deckelabschnitt und Verriegelungsanordnung, die verriegelte Stellung betreffend;
- Fig. 7: den Schnitt gemäß der Linie VII-VII in Fig. 6;

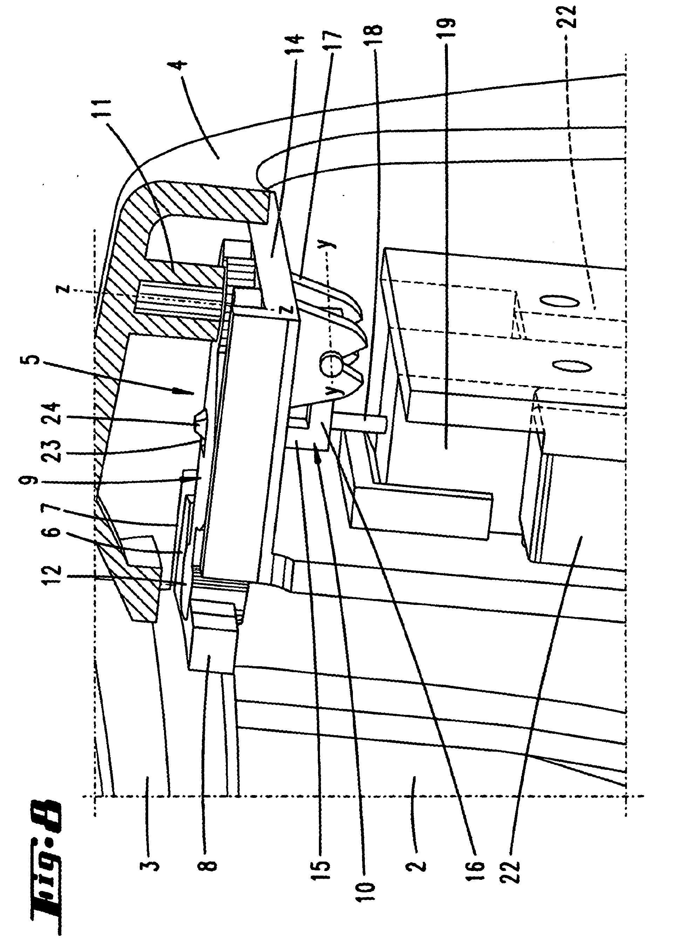

- Fig. 8: eine weitere partiell geschnittene, perspektivische Darstellung des Zusammenwirkungsbereiches in der Verriegelungsstellung;

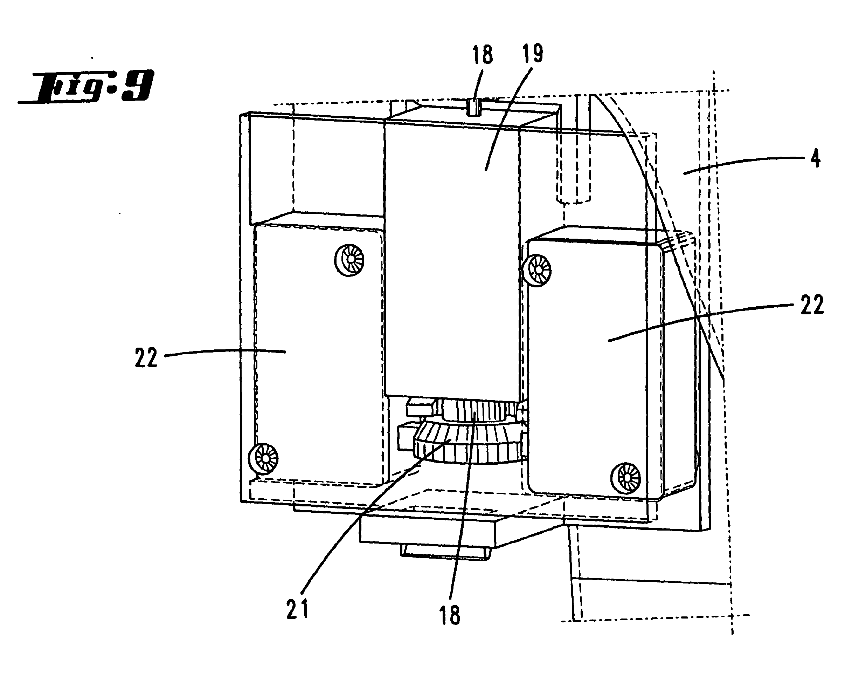

- Fig. 9: eine perspektivische Darstellung, den Bereich zweier, in der Verriegelungsstellung betätigte Schalter betreffend;
- Fig. 10: eine perspektivische Darstellung einer erfindungsgemäßen Küchenmaschine mit einem deckelverschlossenen und in das Gehäuse der Küchenmaschine eingesetztem Rührgefäß, eine zweite Ausführungsform betreffend;
- Fig. 11: den Schnitt gemäß der Linie XI-XI in Fig. 10;
- Fig. 12: eine vereinfachte perspektivische Darstellung eines Zusammenwirkungsbereiches zwischen einer Betätigungsstange und einem mit einem Drehzahlsteller drehgekoppelten Verriegelungselement;
- Fig. 13: die Ansicht gemäß Pfeil XIII in Fig. 12;
- Fig. 14: eine der Fig. 10 entsprechende Darstellung, jedoch bei nicht aufgesetztem Rührgefäßdeckel;
- Fig. 15: den Schnitt gemäß der Linie XV-XV in Fig. 14;
- Fig. 16: eine der Fig. 13 entsprechende Darstellung, jedoch in der den Drehzahlsteller verriegelnden Position der Betätigungsstange;
- Fig. 17: den vergrößert dargestellten Schnitt gemäß der Linie XVII-XVII in Fig. 10;
- Fig. 18: eine schematische Explosionsperspektive der der Verriegelung dienenden Elemente.

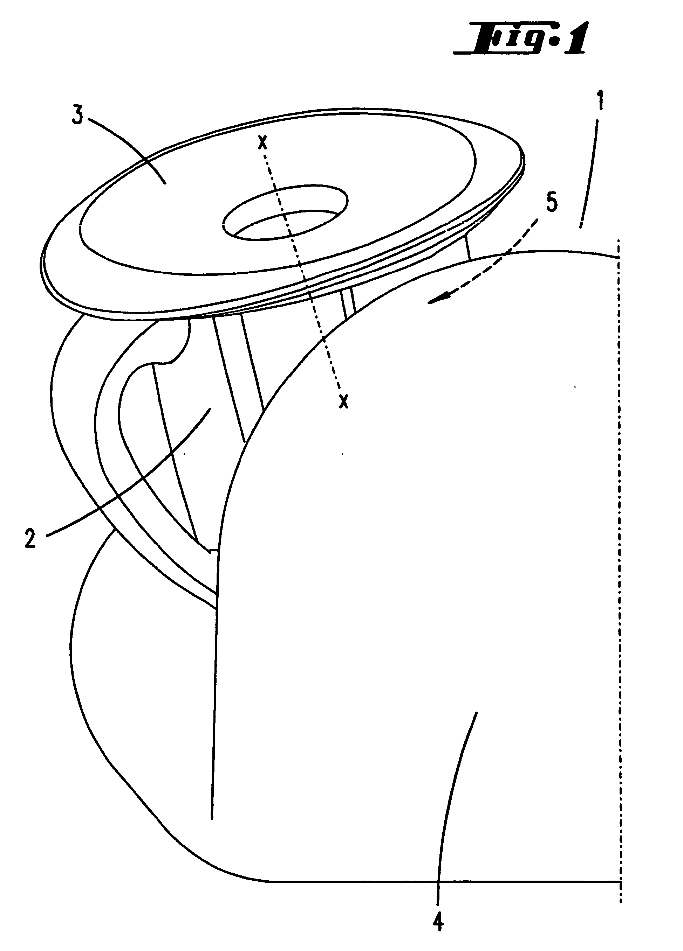

Dargestellt und beschrieben ist zunächst mit Bezug zu Fig. 1 eine Küchenmaschine 1 mit einem Rührgefäß 2, einem das Rührgefäß 2 verschließenden Deckel 3 und einem, das Rührgefäß 2 aufnehmenden Gehäuse 4.

In dem Gehäuse 4 ist ein nicht dargestellter Elektromotor zum Antrieb eines gleichfalls nicht dargestellten, in dem Rührgefäß 2 integrierten Rührwerkes angeordnet, welcher Rührwerk-Motor über einen wiederum nicht dargestellten Drehzahlsteller ansteuerbar ist. Des weiteren kann in dem Gehäuse 4 oder bodenseitig des Rührgefäßes 2 eine Heizung vorgesehen sein, welche über einen entsprechenden Steller einstellbar ist. Bezüglich der Anordnung und Ansteuerung von Rührwerk und Heizung wird bspw. auf die EP-B1 0 757 530 verwiesen. Der Inhalt dieses Patentes wird hiermit vollinhaltlich in die Offenbarung vorliegender Erfindung mit einbezogen, auch zu dem Zwecke, Merkmale dieses Patentes in Ansprüche vorliegender Erfindung mit einzubeziehen.

Aus Gründen der Sicherheit besteht das Bedürfnis; den Eingriff in das Rührgefäß 2 während des Betriebs, d. h. insbesondere während des Betriebs des Rührwerks, nicht zu ermöglichen. Hierzu ist eine Verriegelung vorgesehen, welche erst nach einem Stillstand des Rührwerkes den Eingriff in das Rührgefäß 2 ermöglicht.

In dem Gehäuse 4 ist eine Verriegelungsvorrichtung 5 vorgesehen, welche mit einem Deckelabschnitt 6 des Deckels 3 zusammenwirkt.

Dieser Deckelabschnitt 6 ist in dem dargestellten Ausführungsbeispiel als ein radial über den Deckelrand hinausragender Steg ausgeformt.

Die in Verstecktlage in dem Gehäuse 4 angeordnete Verriegelungsvorrichtung 5 ist durch diesen Deckelabschnitt 6 beaufschlagbar, indem durch Drehen des Dekkels 3 bzw. durch Drehen von Rührgefäß 2 mit dem Deckel 3 um die Gefäßachse x der Deckelabschnitt 6, eine entsprechend angeordnete, schlitzartige Gehäuseöffnung 7 durchtretend, in den Wirkungsbereich der Verriegelungsvorrichtung 5 einfährt.

In Verriegelungs-Drehrichtung r ist dem Deckelabschnitt 6 ein weiterer Radialabschnitt 8 mit Abstand vorgelagert.

Die Verriegelungsvorrichtung 5 setzt sich im Wesentlichen zusammen aus einem, bei ordnungsgemäß aufgesetztem Deckel 3 auf dem Rührgefäß 2 in der Drehebene des Deckelabschnittes 6 verschwenkbaren Freigabeelement 9 und einem senkrecht zu der Verlagerungsebene des Freigabeelementes mit diesem zusammenwirkenden Verriegelungselement 10 zusammen.

Das Freigabeelement 9 ist um einen im Wesentlichen parallel zur Rührgefäßachse x ausgerichteten, an der Gehäusewandung angeformten Zapfen 11 verschwenkbar, wobei ein radial abragender Ausleger 12 zur Zusammenwirkung mit dem Deckelabschnitt 6 ausgeformt ist.

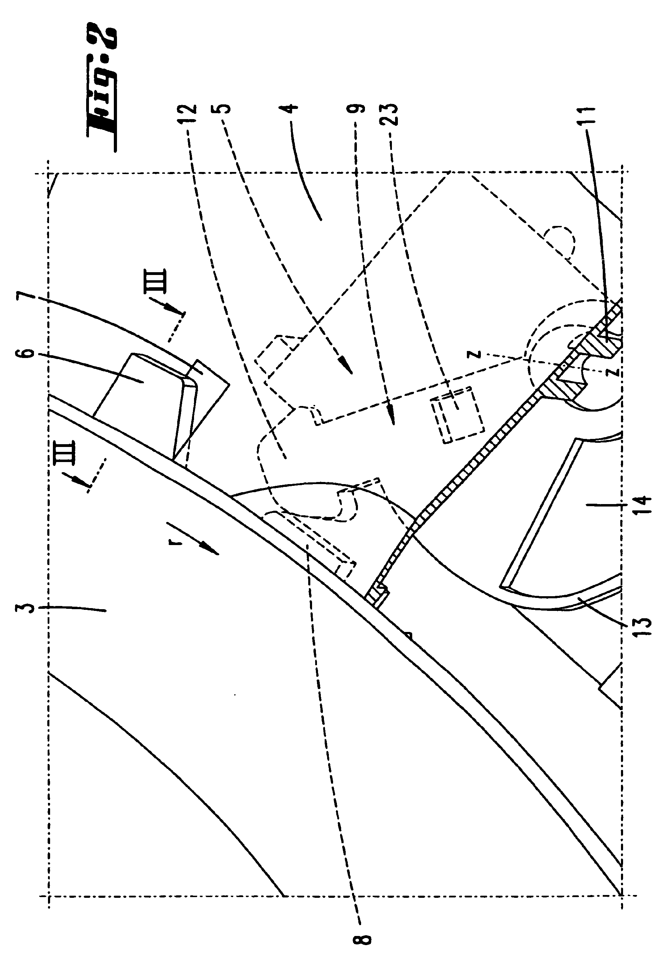

Zudem ist an dem Freigabeelement 9 ein Federfortsatz 13 angeformt, zur Vorspannung des Freigabeelementes 9 in eine, das Verriegelungselement 10 sperrende Stellung gemäß der Darstellung in Fig. 2. Der Federfortsatz 13 stützt sich hierbei an einem Gehäuseabschnitt ab.

Das Verriegelungselement 10 ist in Form einer, unterhalb einer, das Freigabeelement 9 tragenden Halteplatte 14 kippbeweglich gelagerten Wippe ausgeformt und besteht im Wesentlichen aus zwei in einem rechten Winkel zueinander angeordneten Schenkeln 15, 16, wobei der eine Schenkel 15 zur Zusammenwirkung mit dem Freigabeelement 9 ausgeformt ist und der andere Schenkel 16 im Bereich seines freien Endes Lagerzapfen aufweist, die in entsprechend ausgeformten, an der Halteplatte 14 unterseitig angeordneten Halteböckchen 17 eingreifen.

Die Anordnung ist hierbei so gewählt, dass die Kippachse y des Verriegelungselementes 10 quer verläuft zur Schwenkachse z des Freigabeelementes 9.

Das Verriegelungselement 10 ist unterseitig durch einen Stößel 18 eines Elektromagneten 19 in Richtung auf das Freigabeelement 9 beaufschlagbar, wozu zur Kippverlagerung des Verriegelungselementes 10 eine von dem einen Schenkel 15 des Verriegelungselementes 10 durchtretende Durchbrechung 20 in der Halteplatte 14 vorgesehen ist.

Der auch unterseitig des Elektromagneten 19 hinausragende Stößel 18 ist im Bereich seines freien Endes mit einem Nocken 21 versehen, zur Betätigung zweier Schalter 22 bei Erreichen der Verriegelungsstellung.

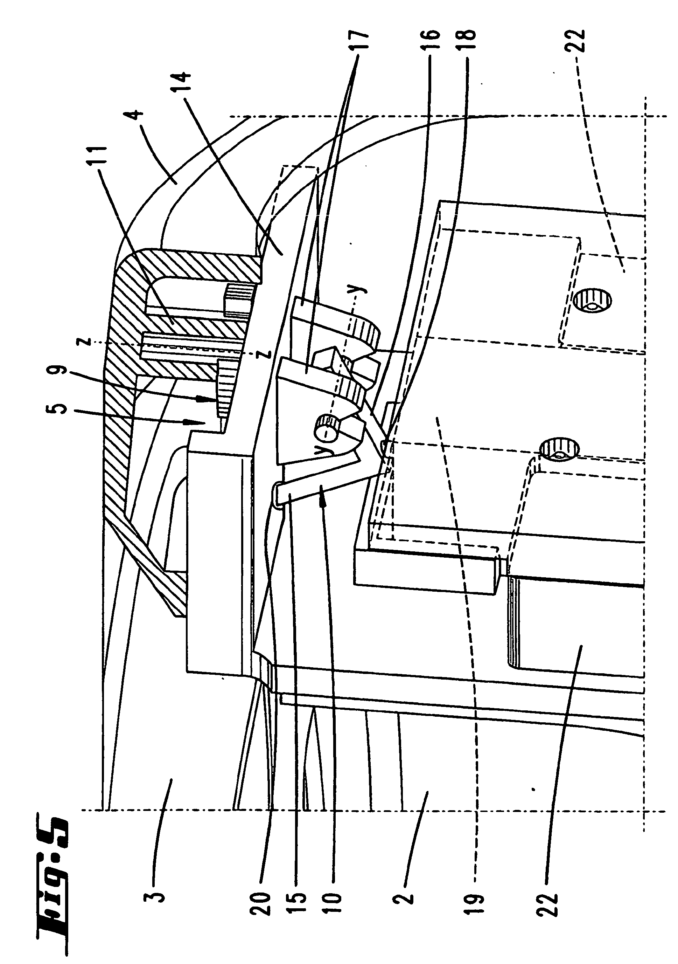

Die Funktionsweise der Verriegelungsvorrichtung 5 ist wie folgt:
In einer Grundstellung gemäß den Fig. 2 bis 5 befindet sich das Freigabeelement 9, bedingt durch die federnde Abstützung über den Federfortsatz 13, in einer Sperrstellung für das Verriegelungselement 10. Der Versuch, über insbesondere den Drehzahlsteller des Gerätes die Küchenmaschine 1, insbesondere das Rührwerk in Betrieb zu nehmen, führt zunächst zu einer Beaufschlagung des Elektromagneten 19 und über dessen Stößel 18 zu einem Versuch der Kippverlagerung des Verriegelungselementes 10. Letzteres tritt jedoch mit seinem freien Ende des Schenkels 15 gegen die Unterseite des in Sperrstellung gehaltenen Freigabeelement 9. Der Hubmagnet 19 kann somit nicht seine Endposition erreichen. Demnach unterbleibt die Betätigung der Schalter 22 über den Nocken 21. Bleibt das in einem Mikrokontroller verarbeitete Signal über die geschalteten Schalter 22 aus, so wird der Elektromagnet 19 abgeschaltet und fällt gemeinsam mit dem Verriegelungselement 10 in die Ausgangslage zurück. Das Verriegelungselement 10 liegt im übrigen lose auf dem Stößel 18 auf, d. h. es besteht keine Verbindung zu dem Elektromagneten 19. Das Verriegelungselement 10 wird durch seine eigene Masse in dieser Position gehalten. Der Hubmagnet ist in der Ausgangsstellung stromlos.

Der Elektromagnet wird auch insbesondere im Fehlerfall direkt abgeschaltet.

Zur Inbetriebnahme der Küchenmaschine 1 ist demnach eine ordnungsgemäße Verlagerung des Rührgefäßes 2 und des Deckels 3 erforderlich, wobei bevorzugt der Deckel 3 mit dem Rührgefäß 2, bspw. bajonettartig, miteinander verbunden ist.

Bei einer Drehverlagerung insbesondere des Deckels 3 um die Rührgefäßachse x taucht der Deckelabschnitt 6 durch die Gehäuseöffnung 7 in den Bereich des Freigabeelementes 9 ein und schleppt hierbei den Ausleger 12 des Freigabeelementes 9 mit, was eine Schwenkverlagerung des Freigabeelementes 9 um dessen Schwenkachse z entgegen der Kraft des Federfortsatzes 13 zur Folge hat. Bei Erreichen einer definierten Endstellung, in welcher der Ausleger 12 zwischen dem Radialabschnitt 8 und dem Deckelabschnitt 6 des Deckels 3 gefangen ist, ist ein Weg für das Verriegelungselement 10 bei unterseitiger Beaufschlagung desselben durch den Elektromagneten 19 freigegeben. Hierzu ist in dem Freigabeelement 9 ein fensterartiger Durchgang 23 ausgeformt. Wird hiernach bei einem Einschalten des Gerätes der Elektromagnet 19 betätigt, so bewirkt der ausfahrende Stößel 18 die Kippverlagerung des Verriegelungselementes 10, wobei das freie Ende des Schenkels 19, die Durchbrechung 20 der Halteplatte 14 durchtretend in den Durchgang 23 des Freigabeelementes 9 eintaucht. Gleichzeitig erfolgt unterseitig des Elektromagneten 19 die Betätigung der Schalter 22 durch den Nocken 21, zur zweipoligen Spannungsbeaufschlagung eines Heizwerkes und/oder des Rührwerk-Motors.

Durch das Eintauchen des Verriegelungselementes 10 wird das Freigabeelement 9 fixiert und der Deckel 3 über die formschlüssige Anordnung zum Freigabeelement 9 verriegelt. Ein Öffnen des Deckels 3 ist in diesem Zustand nicht möglich.

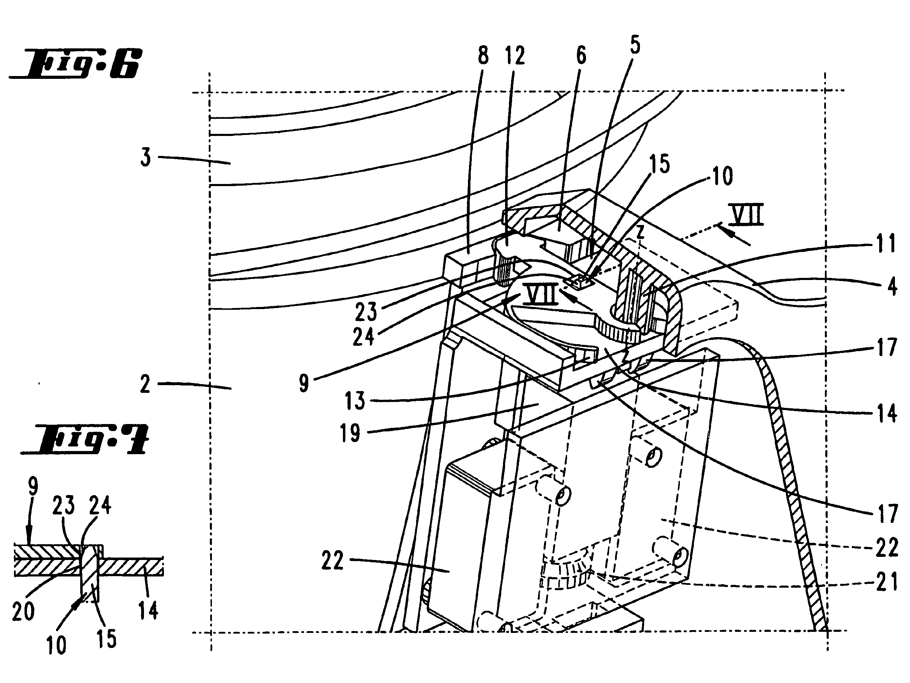

Wie aus der Detaildarstellung in Fig. 7 zu erkennen, ist der mit dem Freigabeelement 9, bzw. mit der Randkante der Durchbrechung 20 zusammenwirkende Endbereich des Verriegelungselement-Schenkels 15 mit einer Schrägfläche 24 versehen. Durch diese Geometrie wird im verriegelten Zustand von Freigabeelement 9 und Verriegelungselement 10 eine Zwangsrückführung des Verriegelungselementes 10 gegen den Elektromagneten durchgeführt. Hierdurch wird ebenfalls der Stromkreis unterbrochen, wonach der Elektromagnet 19 in seine Ausgangsposition zurückfällt. Dieses Verhalten verhindert die Beschädigung der kräfteleitenden Bauteile bei einer gewaltsamen Öffnung des Deckels 3 im verriegelten Zustand.

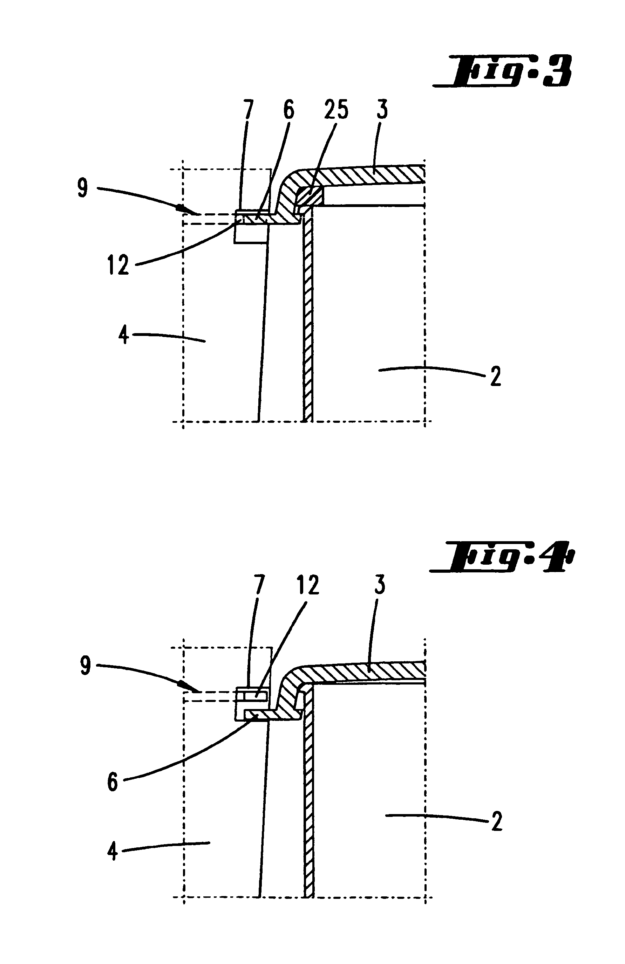

Des weiteren ist durch die erfindungsgemäße Ausgestaltung auch ein nicht ordnungsgemäßes Aufsetzen des Dekkels 3 detektierbar. Wird eine zwischen Deckel 3 und Rührgefäß 2 anzuordnende Deckeldichtung 25 nicht oder nicht ordnungsgemäß an dem Deckel 3 befestigt, so wird die relative Höhenlage des Deckels 3 zu dem Gehäuse 4 um den Betrag der Dichtungshöhe reduziert. Dadurch befinden sich der Radialabschnitt 8 und insbesondere der Deckelabschnitt 6 in einer Position unterhalb des Freigabeelementes 9. Die Gehäuseöffnung 7 ist entsprechend in vertikaler Erstreckung bemessen (vergl. Fig. 3 und 4).

Bei einem Versuch, den Deckel 3 durch Drehung zu arretieren, unterläuft der Deckelabschnitt 6 das Freigabeelement 9. Letzterer verbleibt somit in seiner Ausgangsposition. Das Verriegelungselement 10 kann nicht in den vorgesehenen Durchgang 23 des Freigabeelementes 9 eintauchen, womit die Inbetriebnahme der Küchenmaschine 1 unterbunden ist.

Die beschriebene Verriegelungsvorrichtung 5 in dem Gehäuse 4 kann darüber hinaus auch mit einem entsprechend ausgeformten Radialabschnitt des Rührgefäßes 2 zusammenwirken, womit die korrekte Einsetzposition des Rührgefäßes 2 erfassbar ist. Darüber hinaus ist auch eine Kombination von zu detektierendem Deckel 3 und Rührgefäß 2 mittels getrennt oder auch gemeinsam zu erfassenden Radialabschnitten denkbar.

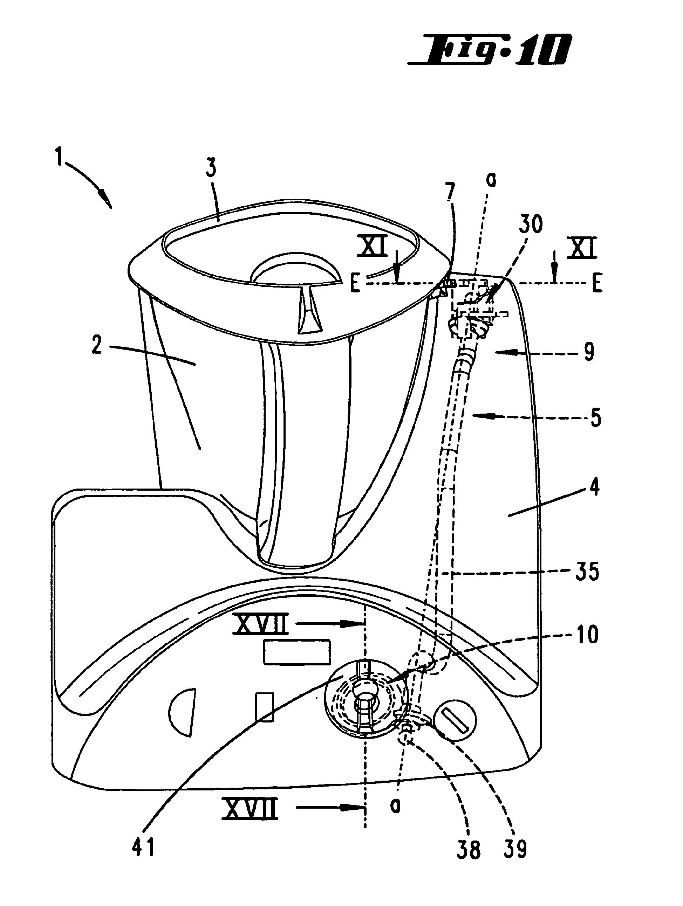

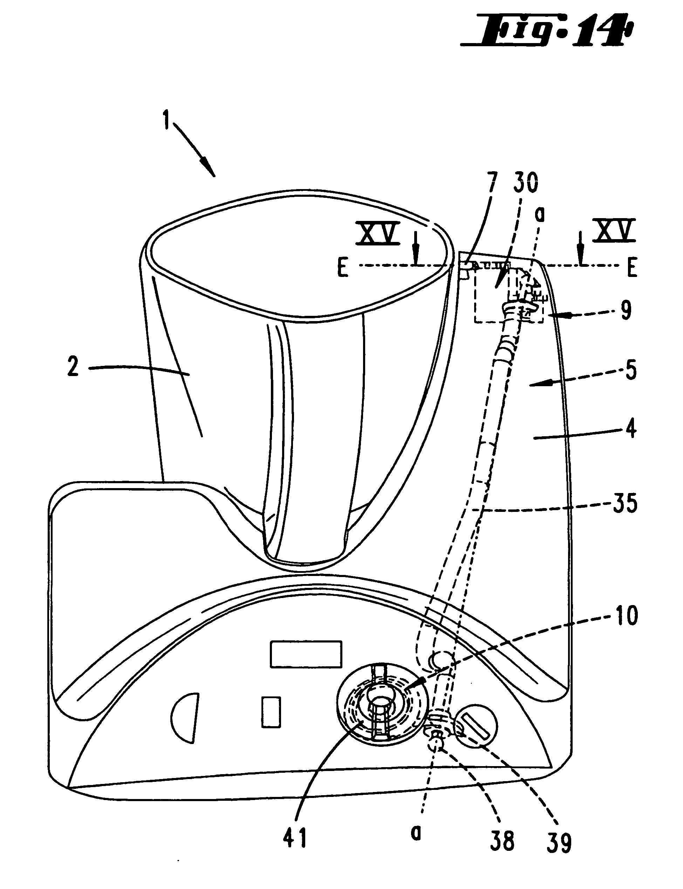

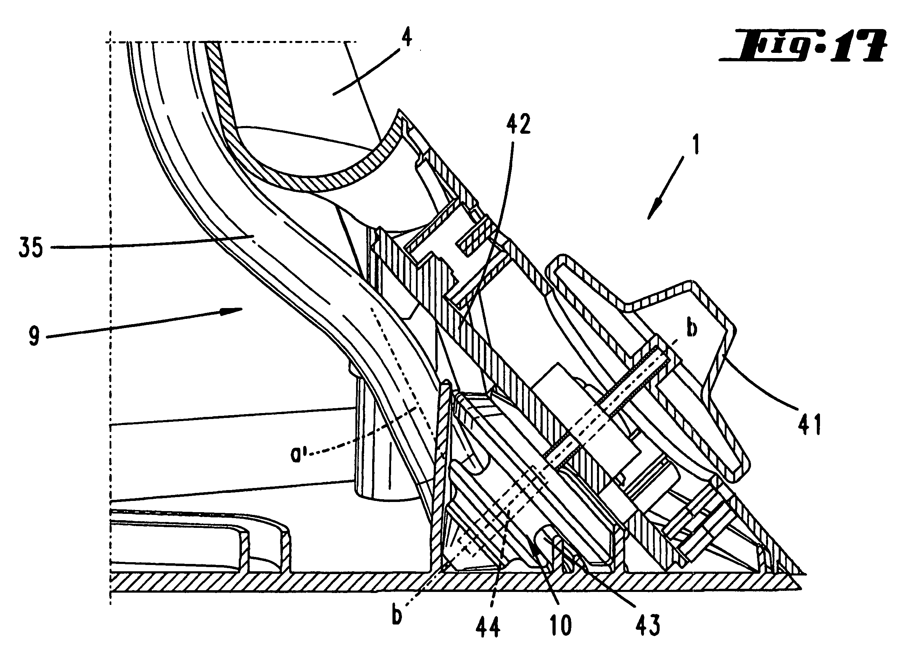

Die Figuren 10 bis 18 zeigen die Erfindung anhand eines zweiten Ausführungsbeispieles. Auch hier ist in dem Gehäuse 4 eine Verriegelungsvorrichtung 5 vorgesehen, welche mit einem als ein radial über den Deckelrand hinausragender Steg ausgeformten Deckelabschnitt 6 zusammenwirkt.

Hierzu ist zunächst im Zusammenwirkungsbereich mit dem Deckelabschnitt 6 ein Sperr-Mitnahmeteil 30 vorgesehen. Dieses formt in der Verriegelungsebene E zwischen dem Rührgefäß 2 und dem Deckel 3 einen etwa schwalbenschwanzförmig nach radial außen sich öffnenden Mitnahmeabschnitt 31 aus, welcher an einem, um eine parallel zur Rührgefäßachse x verlaufenden Schwenkachse z drehbar gelagerten Mitnahme-Grundteil 32 angeformt ist.

An diesem Mitnahme-Grundteil 32 ist ein radial abragender, im Grundriss etwa halbkreisförmig gekrümmt verlaufender Mitnahmearm 33 angeformt, welcher im Bereich seines freien Endes einen nach unten weisenden Mitnahmezapfen 34 besitzt.

Der Mitnahmearm 33 umfasst ein Ende einer Betätigungsstange 35. In diesem Endbereich ist mit axialem Abstand zum freien Ende eine quer zu der örtlichen Längsachse des Stangen-Endabschnittes vorragende Mitnehmerscheibe 36 angeformt, welch letztere eine randoffene Radialaussparung 37 zum Eintritt des Mitnahmezapfens 34 besitzt.

Die Betätigungsstange 35 und das Sperr-Mitnahmeteil 30 bilden zusammen das Freigabeelement 9.

Am fußseitigen Ende der Betätigungsstange 35 ist ein Kugelkopf 38 ausgebildet, welcher gelagert ist in einer nicht näher dargestellten, gehäuseseitigen Pfanne. Der zugeordnete Fußabschnitt der Betätigungsstange 35 erstreckt sich im Wesentlichen in axialer Verlängerung zum kopfseitigen, von dem Mitnahmearm 33 umfassten Ende, womit eine diese beiden Enden verbindende Linie zugleich eine Längsachse a der Betätigungsstange 35 bildet. Zwischen diesen beiden Endbereichen verläuft die Betätigungsstange 35 mehrfach gekröpft.

Fußseitig trägt die Betätigungsstange 35 eine quer zu ihrer örtlichen Längsachse a' vorragende Blockierungsscheibe 39. Letztere erstreckt sich nur über einen Teil des Umfangs der Betätigungsstange 35, so in dem dargestellten Ausführungsbeispiel etwa über 100 bis 120°.

Die Blockierungsscheibe 39 geht in ihrer Umfangserstreckung in einen Eingriffszahn 40 über, welch letzterer etwa tangential zur Betätigungsstange 35 verlaufend angeordnet ist. Die freie Spitze des Eingriffszahns 40 endet auf einer gedachten Verlängerung der Blockierungsscheiben-Randkante.

Die an der Betätigungsstange 35 einstückig angeformte Blockierungsscheibe 39 wirkt zusammen mit einem, mit einem Drehzahlsteller 41 drehfest gekuppelten Verriegelungselement 10. Letzteres ist endseitig eines, eine Steuerungsplatine 42 durchsetzenden Drehzahlsteller-Achskörpers befestigt. Eine Drehbetätigung des Drehzahlstellers 41 wird somit direkt auf das Verriegelungselement 10 übertragen.

Das Verriegelungselement 10 ist etwa kreiselförmig ausgebildet mit einer Umfangsnut 43 und einer, diese Umfangsnut 43 kreuzenden, in Richtung der Drehachse b des Drehzahlstellers 41 sowie des Verriegelungselementes 10 verlaufenden Blockierungsnut 44.

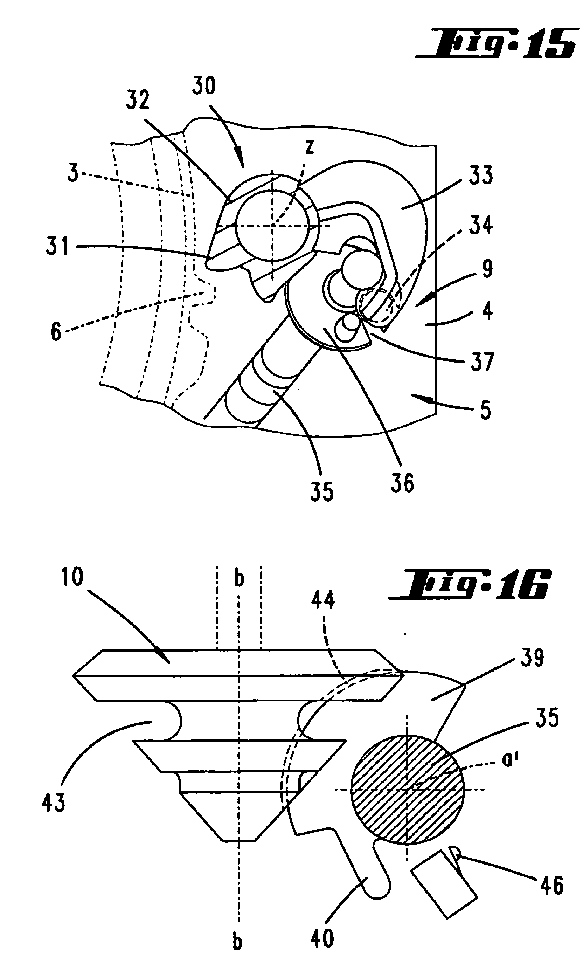

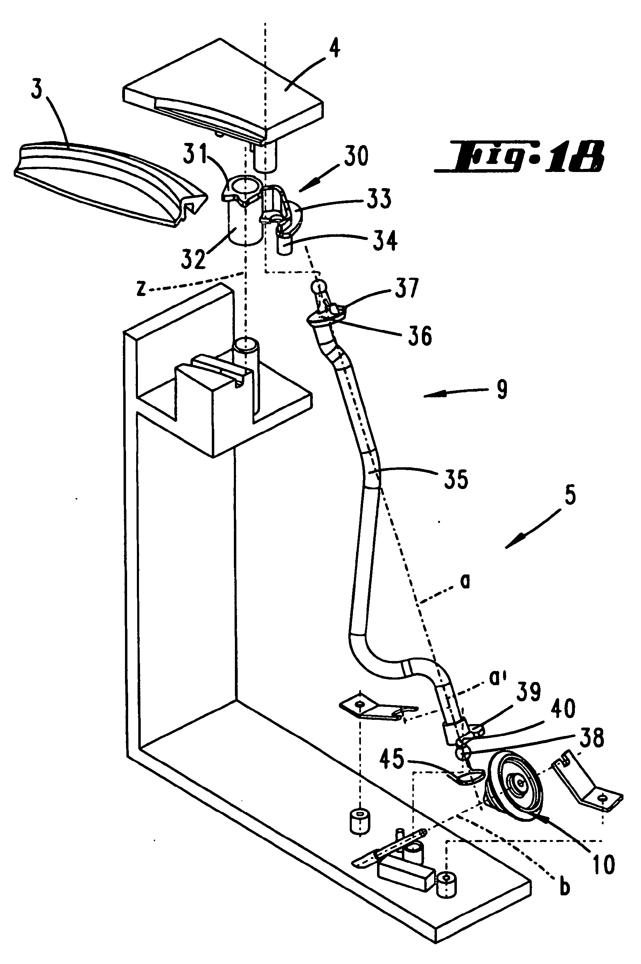

Wie insbesondere aus der Darstellung in Fig. 18 zu erkennen, ist des Weiteren fußseitig der Betätigungsstange 35 eine Schenkelfeder 45 vorgesehen, welche sich einerends gehäuseseitig abstützt und mit ihrem anderen Ende die Betätigungsstange 35 und hierüber das Sperr-Mitnahmeteil 30 in eine Deckelfreigabestellung gemäß Fig. 15 beaufschlagt.

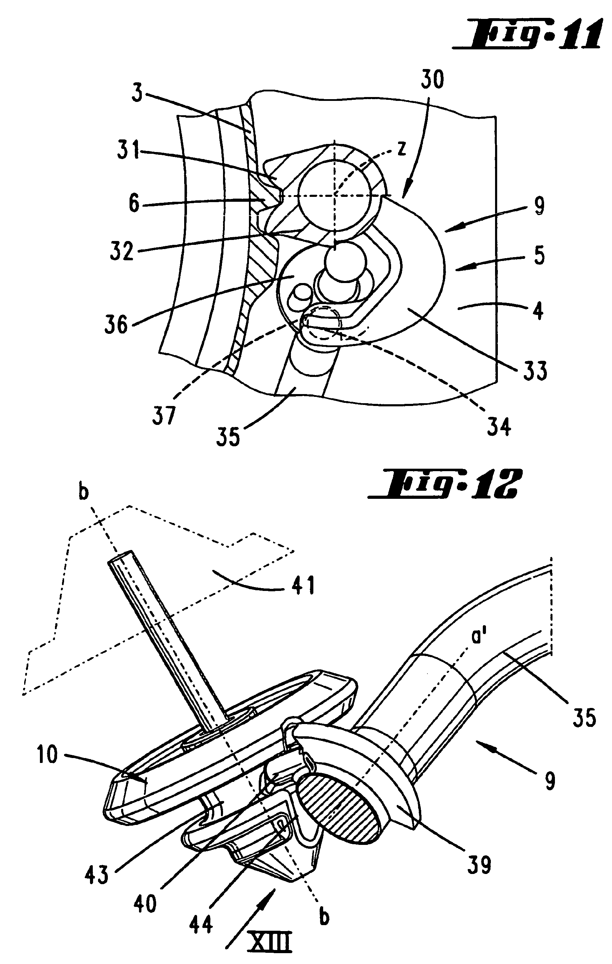

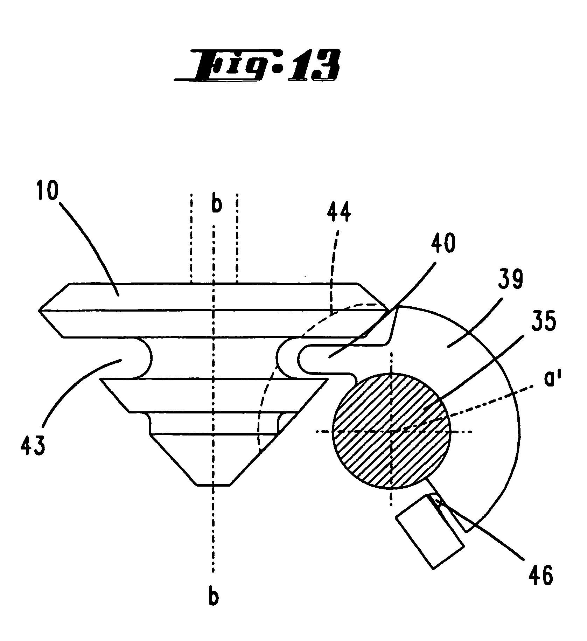

In den Fig. 10 bis 13 ist die Situation dargestellt, welche sich bei ordnungsgemäß aufgesetztem Deckel 3 einstellt. So ist durch den Deckelabschnitt 6 in Zusammenwirkung mit dem Mitnahmeabschnitt 31 das Sperr-Mitnahmeteil 30 mit Bezug zu Fig. 11 in Uhrzeigerrichtung um die Schwenkachse z gedreht, wonach in der dargestellten Deckel-Verdrehstellung der Deckelabschnitt 6 in dem schwalbenschwanzartig sich öffnenden Mitnahmeabschnitt 31 gefangen ist. Über das Sperr-Mitnahmeteil 30 ist die Betätigungsstange 35 um die Längsachse a verdreht. Die fußseitig an der Betätigungsstange 35 angeformte Blockierungsscheibe 39 nimmt die Stellung gemäß den Fig. 12 und 13 ein, wobei diese Blockierungsscheibe 39 außer Eingriff zur Blockierungsnut 44 des Verriegelungselementes 10 verlagert ist. Der Eingriffszahn 40 hingegen greift in dieser Betriebsstellung in die Umfangsnut 43 des Verriegelungselementes 10 ein, was nach einer Drehverlagerung des Verriegelungselementes 10 über den Drehzahlsteller 41 aus der Aus-Position heraus eine Drehblockierung der Betätigungsstange 35 zur Folge hat. Da der Eingriffszahn 40 in der verdrehten Stellung des Verriegelungselementes 10 in Drehrichtung der Betätigungsstange 35 in der Umfangsnut 43 gefangen ist, ist auch eine Rückverlagerung des Sperr-Mithnahmeteiles 30 zur Freigabe des Deckels 3 unterbunden. Somit ist sichergestellt, dass der Deckel 3 bei eingeschaltetem Rührwerk nicht entfernt werden kann.

In der Aus-Position des Drehzahlstellers 41 liegt die Blockierungsnut 44 des Verriegelungselementes 10 im Schwenkbereich des Eingriffszahns 40. Somit kann in dieser Drehzahlsteller-Stellung eine Entriegelung des Deckels 3 erfolgen, wobei über den Deckelabschnitt 6 das Sperr-Mitnahmeteil 30 und hierüber weiter die Betätigungsstange 35 zurückverschwenkt werden. Im Zuge dieser Drehverlagerung taucht die Blockierungsscheibe 39 in die Blockierungsnut 44 des Verriegelungselementes 10 ein, was die Drehblockierung des Drehzahlstellers 41 zur Folge hat. Somit wird auf mechanischem Wege verhindert, dass das Rührwerk ohne ordnungsgemäß aufgesetzten Deckel 3 eingeschaltet werden kann.

Wie insbesondere aus den Darstellungen in den Fig. 13 und 16 zu erkennen, ist des Weiteren ein elektrischer Schalter 46 vorgesehen, welcher bei ordnungsgemäß aufgesetztem Deckel 3 über die Betätigungsstange 35 und die daran angeformte Blockierungsscheibe 39 betätigt wird, so dass die Stromversorgung der Steuerungsplatine 42 freigegeben ist. Bevorzugt wird über den Schalter 46 die Stromversorgung des Rührwerks und gegebenenfalls einer Heizung freigegeben. Da das Befüllen des Rührgefäßes 2 in der Regel bei abgenommenem Deckel 3 erfolgt, erweist es sich als vorteilhaft, wenn eine eventuell vorgesehene Wägeeinrichtung unabhängig von der Stellung der Verriegelungsvorrichtung 5 und somit einer Beaufschlagung des Schalters 46 arbeitet.

## Patentansprüche

1. Küchenmaschine (1) mit einem Rührgefäß (2), einem Deckel (3) und einem Gehäuse (4) wobei das Rührgefäß (2) und der Deckel (3) derart verriegelbar sind, dass ein Eingriff in das Rührgefäß (2) während des Betriebes nicht möglich ist, wobei weiter das Rührgefäß (2) und/oder der Deckel (3) durch Verdrehen um die Vertikalachse des Rührgefäßes ver- bzw. entriegeln, wobei aufgrund der Verdrehung des Rührgefäßes (2) und/oder des Deckels (3) ein elektrischer Schalter (46) betätigt wird, der die Stromversorgung einer Steuerungsplatine (42) freigibt, **dadurch gekennzeichnet, dass** die Steuerungsplatine zumindest einen das Rührwerk beeinflussenden Schaltkreis aufweist und einen eine Wägeeinrichtung betreffenden Schaltkreis, und wobei weiter der das Rührwerk betreffende Schaltkreis aufgrund der Schalterbetätigung freigegeben ist, aber der die Wägeeinrichtung betreffende Schaltkreis von einer Schalterbetätigung unabhängig ist.

2. Küchenmaschine nach Anspruch 1, **dadurch gekennzeichnet, dass** durch Verdrehen um die Vertikalachse ein Freigabeelement (9) verlagert wird, das nach erfolgter Verlagerung den Weg für ein Verriegelungselement (10) freigibt.

3. Küchenmaschine nach Anspruch 2, **dadurch gekennzeichnet, dass** das Verriegelungselement (10) magnetbetätigt ist.

4. Küchenmaschine nach Anspruch 3, **dadurch gekennzeichnet, dass** der Magnet (19) durch einen Drehzahlsteller des Gerätes zu aktivieren ist.

5. Küchenmaschine nach Anspruch 4, **dadurch gekennzeichnet, dass** das durch den Magneten (19) bewirkte Verriegelungselement (10) im Zuge der Bewegung in die Verriegelungsstellung zugleich einen Schalter für die Spannungsbeaufschlagung eines Heizwerkes und/oder eines Rührwerk-Motors betätigt.

6. Küchenmaschine nach einem oder mehreren der vorhergehenden Ansprüche oder insbesondere danach, **dadurch gekennzeichnet, dass** das Verriegelungselement (10) mit dem Raddrehzahlsteller (41) gekoppelt ist.

7. Küchenmaschine nach einem oder mehreren der vorhergehenden Ansprüche oder insbesondere danach, **dadurch gekennzeichnet, dass** der Drehzahlsteller (41) das Verriegelungselement (10) ist.

8. Küchenmaschine nach einem oder mehreren der vorhergehenden Ansprüche oder insbesondere danach, **dadurch gekennzeichnet, dass** das Freigabeelement (9) eine Betätigungsstange (35) aufweist, welche die Verbindung zwischen einer Verriegelungsebene (E) zwischen dem Rührgefäß (2) und dem Deckel (3) und dem Drehzahlsteller (41) schafft.

## Claims

1. A food processor (1) having a mixing vessel (2), a lid (3) and a housing (4), the mixing vessel (2) and the lid (3) being lockable in such a manner that access to the mixing vessel (2) is not possible during operation, the mixing vessel (2) and/or the lid (3) further being lockable and releasable by twisting about the vertical axis of the mixing vessel, an electrical switch (46) being actuated on account of the twisting of the mixing vessel (2) and/or the lid (3), the switch enabling supply of power to a control board (42), **characterized in that** the control board has at least one circuit controlling the mixing member and a circuit relating to a weighing device, and the circuit relating to the mixing member further being enabled on account of actuation of the switch, but the circuit relating to the weighing device being independent of actuation of the switch.

2. A food processor according to Claim 1, **characterized in that** an unblocking element (9) is displaced by twisting about the vertical axis, and the unblocking element, after its displacement has taken place, releases the path for a locking element (10).

3. A food processor according to Claim 2, **characterized in that** the locking element (10) is magnetically actuated.

4. A food processor according to Claim 3, **characterized in that** the magnet (19) is to be activated by a speed controller of the device.

5. A food processor according to Claim 4, **characterized in that** the locking element (10) acted on by the magnets (19), in the course of the movement into the locking position, also actuates a switch for activation of a heating feature and/or a motor for the mixing member.

6. A food processor according to one or more of the preceding claims, **characterized in that** the locking element (10) is coupled to the rotational speed controller (41).

7. A food processor according to one or more of the preceding claims, **characterized in that** the speed controller (41) is the locking element (10).

8. A food processor according to one or more of the preceding claims, **characterized in that** the unblocking element (9) is an actuating rod (35) which creates the connection between a locking plane (E) between the mixing vessel (2) and the lid (3) and the speed controller (41).

## Revendications

1. Robot ménager (1) comprenant un récipient d'agitation (2), un couvercle (3) et un boîtier (4), le récipient d'agitation (2) et le couvercle (3) étant verrouillables, de manière qu'un engagement dans le récipient d'agitation (3) soit impossible pendant le fonctionnement, dans lequel, en outre; le récipient d'agitation (2) et/ou le couvercle (3) sont verrouillés ou déverrouillés par une rotation autour de l'axe vertical du récipient d'agitation, dans lequel, du fait de la rotation du récipient d'agitation (2) et/ou du couvercle (3), un interrupteur électrique (46) est actionné, libérant l'alimentation en énergie d'une platine de commande (42), **caractérisé en ce que** la platine de commande présente au moins un circuit de commutation influant sur le groupe agitateur et un circuit de commande concernant un appareil de pesage, et où, en outre, le circuit de commutation concernant l'appareil d'agitation est déclenché du fait de l'actionnement par interrupteur, mais le circuit de commande concernant le dispositif de pesée est indépendant d'un actionnement par un interrupteur.

2. Robot ménager selon la revendication 1, **caractérisé en ce que**, par une rotation autour de l'axe vertical, un élément de libération (9) est déplacé, élément qui, une fois le déplacement effectué, libère la course pour un élément de verrouillage (10).

3. Robot ménager selon la revendication 2, **caractérisé en ce que** l'élément de verrouillage (10) est actionné par un aimant.

4. Robot ménager selon la revendication 3, **caractérisé en ce que** l'aimant (19) est à activer par un régleur de vitesse de rotation de l'appareil.

5. Robot ménager selon la revendication 4, **caractérisé en ce que** l'élément de verrouillage (10) actionné par l'aimant (19), au cours du déplacement vers la position de verrouillage, actionne en même temps un commutateur pour l'alimentation en tension d'un groupe de chauffage et/ou d'un moteur de groupe agitateur.

6. Robot ménager selon l'une ou plusieurs des revendications précédentes, **caractérisé en ce que** l'élément de verrouillage (10) est couplé au régleur de vitesse de rotation de roue (41).

7. Robot ménager selon l'une ou plusieurs des revendications précédentes, **caractérisé en ce que** le régleur de vitesse de rotation (41) est l'élément de verrouillage (10).

8. Robot ménager selon l'une ou plusieurs des revendications précédentes, **caractérisé en ce que** l'élément de libération (9) présente une tige d'actionnement (35), qui crée la liaison entre un plan de verrouillage (E) entre le récipient d'agitation (2) et le couvercle (3) et le régleur de vitesse de rotation (41).
